# EUROPEAN PATENT APPLICATION

(11) **EP 4 618 246 A1**
(43) Date of publication of application: **17.09.2025**
(21) Application number: 23909917.9
(22) Date of filing: 30.11.2023
(51) Int. Cl.: H01M 10/617, H01M 10/6568, H01M 10/6556

(54) **THERMALLY BALANCED BATTERY PACK AND BATTERY PACK ENERGY STORAGE SYSTEM**

(30) Priority: 29.12.2022 CN 202211718269
(71) Applicant: Envision Energy Technology Pte Ltd., 079903 Singapore (SG)
(72) Inventor: WANG, Bing, Shanghai 200023 (CN); YIN, Lichao, Shanghai 200023 (CN); XU, Zhonghua, Shanghai 200023 (CN); QIAN, Zhenhua, Shanghai 200023 (CN)
(74) Representative: Herrero & Asociados, S.L.
(86) International application number: PCT/CN2023/135417
(87) International publication number: WO 2024/139987

(57) **Abstract**

The present disclosure relates to a thermally balanced battery pack and a battery pack energy storage system. The battery pack includes a battery module, a front end plate, a rear end plate, a bottom plate, two liquid cooling plates, and an upper cover. The front end plate is placed at a front end of the battery module; the rear end plate is placed at a rear end of the battery module; and the bottom plate is positioned at a bottom end of the battery module. The liquid cooling plates are internally provided with flow channels. The two liquid cooling plates are placed on two sides of the battery module, respectively, to carry away heat of the battery module through a cooling liquid. A thermally conductive pad is arranged between the liquid cooling plates and the battery module, and an outer side of each of the liquid cooling plates is provided with a thermal insulation sticker. The battery module is connected to positive and negative output terminals through a copper busbar, and the copper busbar is installed on the front end plate. The front end plate, the rear end plate, the bottom plate, the liquid cooling plates, and the upper cover are fixed by fasteners to form a rectangular frame structure that wraps around the battery module. Compared with existing technologies, the present disclosure has advantages such as uniform temperature difference, good heat dissipation effect, and simple structure.

## Description

### TECHNICAL FIELD

The present disclosure relates to the technical field of electric energy storage, and more particularly, to a thermally balanced battery pack and a battery pack energy storage system.

### BACKGROUND

With the rapid development of the electric vehicle industry, there is an increasing demand for battery packs, and the safety of the battery packs has become particularly important. The battery packs may generate higher temperature when they are used to provide power to vehicles. The battery packs may be damaged if they are not cooled down in time, which may adversely affect proper use of the electric vehicles and even pose safety risks.

Current liquid cooling methods for liquid cooled battery packs mainly rely on bottom liquid cooling. For square cells, there is a larger temperature difference in a height direction (between terminal posts of the cells and bottoms of cell shells) of the cells. As the height increases, such as the 280Ah (174 × 74 × 204 width, thickness and height) common in the market, there is a temperature difference of 7-10°C when the bottom liquid cooling is used. The temperature difference between the top and the bottom of a single cell has a significant impact on cycle life and safety of the cell. In the current market, the battery packs are mainly comprises of key components such as modules, liquid cooling systems, and boxes, with complex structures and high costs. In liquid cooled energy storage systems in the current market, generally the cells are integrated into liquid cooled modules, such that battery packs are formed by the modules, and then the battery packs are connected in series to form battery racks. The battery packs have numerous interfaces and complex structures.

Therefore, how to achieve high-performance thermally balanced battery packs and battery pack energy storage systems simple in structure has become a technical problem that needs to be solved urgently.

### SUMMARY

Objectives of the present disclosure are to provide a thermally balanced battery pack and a battery pack energy storage system to overcome the shortcomings of the existing technologies.

The objectives of the present disclosure may be achieved through the following technical solutions.

The thermally balanced battery pack includes a battery module, a front end plate, a rear end plate, a bottom plate, two liquid cooling plates, and an upper cover. The front end plate is placed at a front end of the battery module; the rear end plate is placed at a rear end of the battery module; and the bottom plate is positioned at a bottom end of the battery module. The liquid cooling plates are internally provided with flow channels for circulation of a cooling liquid. The two liquid cooling plates are placed on two sides of the battery module, respectively, to carry away heat of the battery module through the cooling liquid in the liquid cooling plates. A thermally conductive pad is arranged between the liquid cooling plates and the battery module, and an outer side of each of the two liquid cooling plates is provided with a thermal insulation sticker to insulate the heat. The battery module is connected to positive and negative output terminals through a copper busbar, and the copper busbar is installed on the front end plate. The front end plate, the rear end plate, the bottom plate, the liquid cooling plates, and the upper cover are fixed by fasteners to form a cuboid frame structure that wraps around the battery module.

Further, the battery module includes a plurality of cells, a thermal conductive adhesive, and a phase change thermal spreader. The phase change thermal spreader is connected to a side of the cell to equalize temperature difference of the cell in all directions. The thermal conductive adhesive is positioned between the cell and the phase change thermal spreader to transfer heat from the side of the cell to the phase change thermal spreader. The plurality of cells are connected in series.

Further, a collection circuit module is provided at a top of the battery module to collect voltage and temperature of the cell. The collection circuit module includes a cell voltage collection terminal, a cell temperature collection terminal, and an overcurrent aluminum busbar. The cell voltage collection terminal and the cell temperature collection terminal are welded onto the overcurrent aluminum busbar. The overcurrent aluminum busbar is welded to a terminal post of the cell to form a conductive circuit.

Further, an elastic element is respectively provided at two ends of the battery module to absorb thickness tolerance of the cell.

Further, a terminal base and a battery management module are provided on the front end plate, where the battery management module is connected to the collection circuit module through a wiring harness to detect the voltage and temperature of the cell.

Further, the thermal conductive adhesive is a thermal conductive adhesive with a heat conductivity coefficient of 0.5-3W/mK; and the phase change thermal spreader is internally provided with a microchannel and is filled with a phase change working medium.

Further, both the front end plate and the rear end plate are provided with grooves at their rears for purpose of limiting and fixing when they are assembled into an energy storage system; and a bottom of the bottom plate is provided with a reinforced crossbeam to support weight of the battery module.

The battery pack energy storage system using the thermally balanced battery pack includes a frame, two support brackets, a vertical beam, and a plurality of limit brackets. The two support brackets are respectively fixed on two sides of the frame to come into contact with the bottom plate of the battery pack to support weight of the battery pack. The vertical beam is fixed on a rear side of the frame to match up with the grooves of the rear end plate to limit the battery pack along a left-right direction. The plurality of limit brackets are fixed on the vertical beam to limit the battery pack along a vertical direction. The front end plate is connected to the support brackets on the two sides through the grooves.

Further, the plurality of limit brackets are uniformly fixed on the vertical beam by welding.

Further, the energy storage system includes a plurality of battery packs electrically connected with each other through series-connected copper busbars.

Compared with the existing technologies, the present disclosure has the following beneficial effects.

I. The present disclosure reduces temperature difference of the cells in all directions to be within 2°C by arranging phase change thermal spreaders among the cells, thereby solving the problem of excessive temperature difference between upper and lower parts of the cells, and achieving high-performance thermal balance and safety and reliability of the cells, which can effectively prevent cell damage and safety accidents caused by overheating.

II. In the present disclosure, heat of the cells is carried away by arranging the liquid cooling plates, on the side of the battery pack, in contact with the phase change thermal spreader, such that under continuous high charge and discharge rate at 1C, the temperature difference between the battery packs can be controlled within 3-5°C, which can effectively achieve thermal balance and heat dissipation.

III. In the present disclosure, the rack structure is further simplified, the battery packs are directly connected with each other to form the energy storage system in the form of CTR (Cell to Rack). Because the step of integrating the battery packs is omitted, the structure is simple, the number of components is further reduced, the costs are lower, space utilization of the energy storage system is improved, and its weight is reduced.

### BRIEF DESCRIPTION OF THE DRAWINGS

FIG. 1 is a schematic structural diagram of a battery pack of the present disclosure;
FIG. 2 is a schematic diagram of a finished battery module of the present disclosure;
FIG. 3 is a schematic structural diagram of the battery module of the present disclosure;
FIG. 4 is a schematic structural diagram of installation of a cell and a phase change thermal spreader of the present disclosure;
FIG. 5 is a schematic structural diagram of a bottom plate of the present disclosure;
FIG. 6 is a schematic diagram of installation of the finished battery pack of the present disclosure;
FIG. 7 is a schematic structural diagram of an energy storage system of the present disclosure;
FIG. 8 is a schematic diagram of limiting the battery pack in the energy storage system along a left-right direction according to the present disclosure;
FIG. 9 is a schematic diagram of limiting the battery pack in the energy storage system along a vertical direction according to the present disclosure; and
FIG. 10 is a schematic diagram of a plurality of battery packs connected in series in the energy storage system of the present disclosure.

Reference numerals in the accompanying drawings:
cell 101; thermal conductive adhesive 102; phase change thermal spreader 103; battery module 200; collection circuit module 201; elastic element 202; battery pack 300; copper busbar 301; front end plate 302; rear end plate 303; bottom plate 304; liquid cooling plate 305; thermally conductive pad 306; thermal insulation sticker 307; battery management module 308; wiring harness 309; upper cover 310; terminal base 321; frame 400; support bracket 401; vertical beam 402; and limit bracket 403.

### DETAILED DESCRIPTION

The present disclosure will be described in detail below with reference to the accompanying drawings and specific embodiments. This embodiment is based on the technical solutions of the present disclosure and provides detailed implementations and specific operation processes, but the scope of protection of the present disclosure is not limited to the following embodiments.

### Embodiments

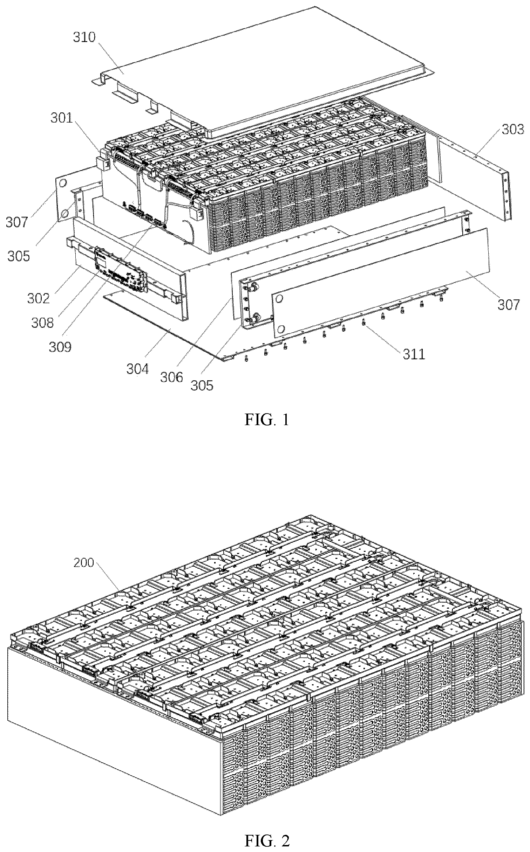

As shown in FIGS. 1 and 2, a thermally balanced battery pack 300 includes a battery module 200, a front end plate 302, a rear end plate 303, a bottom plate 304, two liquid cooling plates 305, and an upper cover 310. The front end plate 302 may be made of aluminum profiles or made in the form of die castings and may be placed at a front end of the battery module 200 to withstand terminal expansion force of the battery module 200. The rear end plate 303 may be made of the aluminum profiles or made in the form of die castings and may be placed at a rear end of the battery module 200 to withstand the terminal expansion force of the battery module 200. The bottom plate 304 may be made of aluminum or steel material and positioned at a bottom end of the battery module 200, and may be bonded to a bottom of the battery module 200 by using a structural adhesive or thermal conductive structural adhesive. The liquid cooling plates 305 may be made of aluminum or steel material and may be internally provided with flow channels for circulation of a cooling liquid. The two liquid cooling plates 305 are placed on two sides of the battery module 200, respectively, to carry away heat of the battery module 200 through the cooling liquid in the liquid cooling plates 305. A thermally conductive pad 306 is arranged between the liquid cooling plates 305 and the battery module 200. An outer side of each of the two liquid cooling plates 305 is provided with a thermal insulation sticker 307 to insulate the heat. The battery module 200 is connected to positive and negative output terminals through a copper busbar 301, and the copper busbar 301 is installed on the front end plate 302. The upper cover 310 is made of insulating and flame-retardant non-metallic material and is used for insulation protection. The front end plate 302, the rear end plate 303, the bottom plate 304, the liquid cooling plates 305, and the upper cover 310 are fixed by fasteners 311 to form a cuboid frame structure that wraps around the battery module 200, such that the battery module 200 is prevented from falling off due to excessive weight.

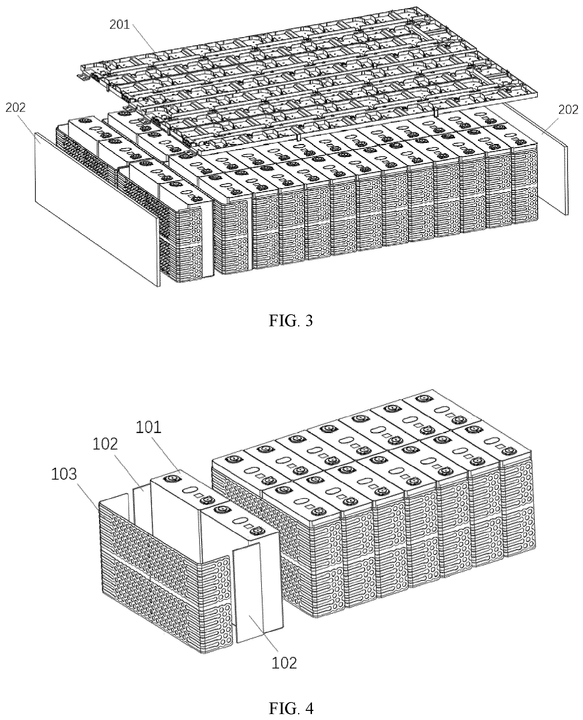

As shown in FIGS. 3 and 4, the battery module 200 includes a plurality of cells 101, a thermal conductive adhesive 102, and a phase change thermal spreader 103. The phase change thermal spreader 103 is connected to a side of a give one of the plurality of cells 101 to equalize temperature difference of the cell 101 in all directions. The thermal conductive adhesive 102 is positioned between the cell 101 and the phase change thermal spreader 103. During assembly, the liquid cooling plates 305 squeeze to ensure sufficient contact between the cell 101 and the phase change thermal spreader 102, which can reduce thermal resistance. The thermal conductive adhesive 102 is used to transfer heat from the side of the cell 101 to the phase change thermal spreader 103. The plurality of cells 101 are connected in series. A collection circuit module 201 is provided at a top of the battery module 200 to collect voltage and temperature of the cell 101. The collection circuit module 201 includes a cell voltage collection terminal, a cell temperature collection terminal, and an overcurrent aluminum busbar. The cell voltage collection terminal and the cell temperature collection terminal are welded onto the overcurrent aluminum busbar; and the overcurrent aluminum busbar is welded to a terminal post of the cell 101 to form a conductive circuit. An elastic element 202 is respectively provided at two ends of the battery module 200 to absorb thickness tolerance of the cell 101, thereby ensuring the assembly between the liquid cooling plates 305 on two sides and the front end plate 302 and the rear end plate 303, and also providing thermal insulation to prevent the temperature difference inside the battery pack 300 from further increasing due to heat dissipation from the end plates of the cells 101 at two ends of the battery module 200. Furthermore, as an end-of-cycle thickness of the cell 101 increases, the elastic element 202 is further compressed, simultaneously providing greater rebound stress, which slows down rapid shortening of lifespan of the cell 101. The thermal conductive adhesive 102 is a thermal conductive adhesive with a heat conductivity coefficient of 0.5-3W/mK. The phase change thermal spreader 103 is internally provided with a microchannel, and is filled with a phase change working medium. The phase change thermal spreader 103 has high heat transfer density of up to 600W/cm2~1000W/cm2, high heat conductivity coefficient of up to 4000~10000W/m·K, and high temperature equalization characteristics, and can control long-distance temperature difference within 1°C.

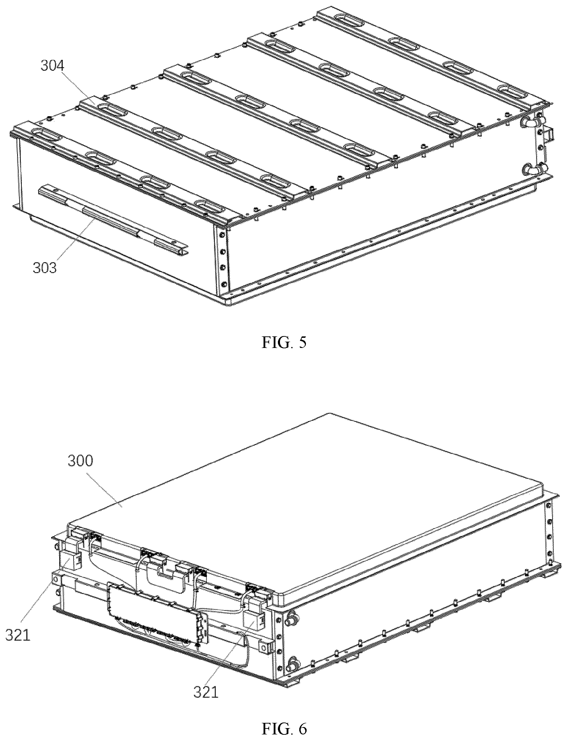

As shown in FIGS. 5 and 6, a terminal base 321 and a battery management module 308 are provided on the front end plate 302. The battery management module 308 is connected to the collection circuit module 201 through a wiring harness 309 to detect the voltage and temperature of the given cell 101. Both the front end plate 302 and the rear end plate 303 are provided with grooves at their rears for purpose of limiting and fixing when they are assembled into an energy storage system. A bottom of the bottom plate 304 is provided with a reinforced crossbeam to support weight of the battery module 200.

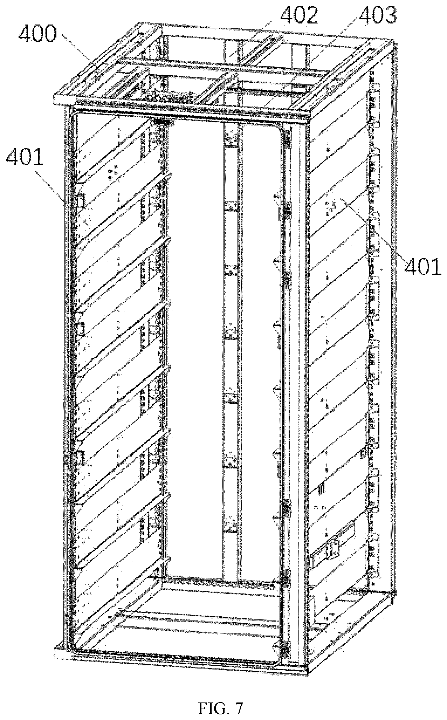

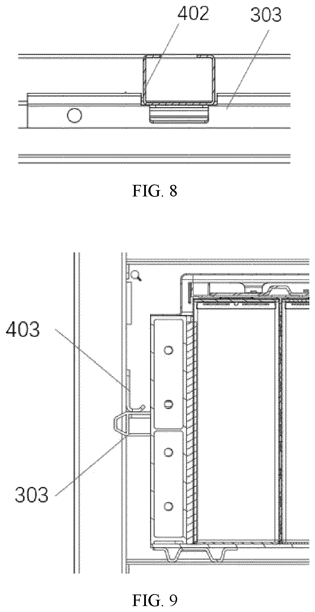

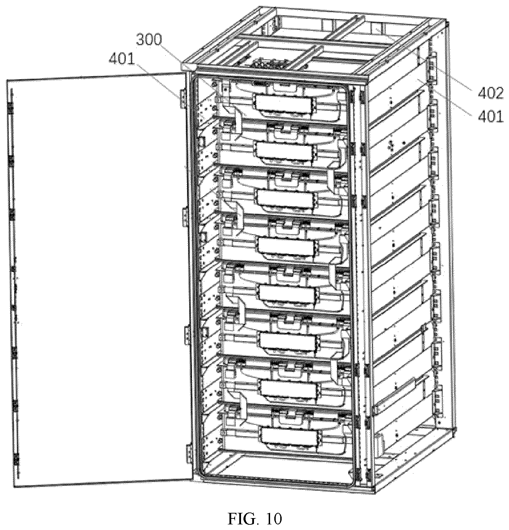

As shown in FIGS. 7 to 10, a battery pack energy storage system using the thermally balanced battery pack includes a frame 400, two support brackets 401, a vertical beam 402, and a plurality of limit brackets 403. The two support brackets 401 are respectively fixed on two sides of the frame 400 to come into contact with the bottom plate 304 of the battery pack 300 to support weight of the battery pack 300. The vertical beam 402 is fixed on a rear side of the frame 400 to match up with the grooves of the rear end plate 303 to limit the battery pack 300 along a left-right direction. The plurality of limit brackets 403 are fixed on the vertical beam 402 to limit the battery pack 300 along a vertical direction; and the plurality of limit brackets 403 are uniformly fixed on the vertical beam 402 by welding. The energy storage system includes a plurality of battery packs 300. During assembly, the plurality of battery packs 300 are placed on the support brackets 401 in sequence, and then are pushed inward. The rear end of the battery pack 300 is restrained from bouncing along left-right direction and up-down direction by the vertical beam 402 and the limit bracket 403 respectively. The front end of the battery pack 300 is connected to the support brackets 401 on the two sides through the groove on the front end plate 302 of the battery packs 300. The plurality of battery packs 300 are electrically connected with each other through series-connected copper busbars, to form the energy storage system in the form of CTR (Cell to Rack), omitting the step of integrating the battery packs 300. Thus, the structure is simple, the number of components is further reduced, the costs are lower, space utilization of the energy storage system is improved, and its weight is reduced.

The above provides a detailed description of the preferred embodiments of the present disclosure. It should be understood that those of ordinary skill in the art can make numerous modifications and changes according to the concept of the present disclosure without creative labor. Therefore, all the technical solutions that can be obtained by those skilled in the art through logical analysis, reasoning or limited experiments according to the concept of the present disclosure on the basis of the existing technologies should fall within the protection scope determined by the claims.

## Claims

1. A thermally balanced battery pack, wherein the battery pack (300) comprises a battery module (200), a front end plate (302), a rear end plate (303), a bottom plate (304), two liquid cooling plates (305), and an upper cover (310); the front end plate (302) is placed at a front end of the battery module (200); the rear end plate (303) is placed at a rear end of the battery module (200); the bottom plate (304) is positioned at a bottom end of the battery module (200); the liquid cooling plates (305) are internally provided with flow channels for circulation of a cooling liquid; the two liquid cooling plates (305) are placed on two sides of the battery module (200) respectively, to carry away heat of the battery module (200) through the cooling liquid in the liquid cooling plates (305); a thermally conductive pad (306) is arranged between the liquid cooling plates (305) and the battery module (200); an outer side of each of the liquid cooling plates (305) is provided with a thermal insulation sticker (307) to insulate the heat; the battery module (200) is connected to positive and negative output terminals through a copper busbar (301); the copper busbar (301) is installed on the front end plate (302); and the front end plate (302), the rear end plate (303), the bottom plate (304), the liquid cooling plates (305), and the upper cover (310) are fixed by fasteners (311) to form a cuboid frame structure that wraps around the battery module (200).

2. The thermally balanced battery pack according to claim 1, wherein the battery module (200) comprises a plurality of cells (101), a thermal conductive adhesive (102), and a phase change thermal spreader (103); the phase change thermal spreader (103) is connected to a side of the cell (101) to equalize temperature difference of the cell (101) in all directions; the thermal conductive adhesive (102) is positioned between the cell (101) and the phase change thermal spreader (103) to transfer heat from the side of the cell (101) to the phase change thermal spreader (103); and the plurality of cells (101) are connected in series.

3. The thermally balanced battery pack according to claim 2, wherein a collection circuit module (201) is provided at a top of the battery module (200) to collect voltage and temperature of the cell (101); the collection circuit module (201) comprises a cell voltage collection terminal, a cell temperature collection terminal, and an overcurrent aluminum busbar; the cell voltage collection terminal and the cell temperature collection terminal are welded onto the overcurrent aluminum busbar; and the overcurrent aluminum busbar is welded to a terminal post of the cell (101) to form a conductive circuit.

4. The thermally balanced battery pack according to claim 2, wherein an elastic element (202) is respectively provided at two ends of the battery module (200) to absorb thickness tolerance of the cell (101).

5. The thermally balanced battery pack according to claim 3, wherein a terminal base (321) and a battery management module (308) are provided on the front end plate (302); the battery management module (308) is connected to the collection circuit module (201) through a wiring harness (309) to detect the voltage and temperature of the cell (101).

6. The thermally balanced battery pack according to claim 2, wherein the thermal conductive adhesive (102) is a thermal conductive adhesive with a heat conductivity coefficient of 0.5-3W/mK; and the phase change thermal spreader (103) is internally provided with a microchannel and is filled with a phase change working medium.

7. The thermally balanced battery pack according to claim 1, wherein both the front end plate (302) and the rear end plate (303) are provided with grooves at their rears for purpose of limiting and fixing when they are assembled into an energy storage system; and a bottom of the bottom plate (304) is provided with a reinforced crossbeam to support weight of the battery module (200).

8. A battery pack energy storage system using the thermally balanced battery pack as claimed in claim 7, wherein the energy storage system comprises a frame (400), two support brackets (401), a vertical beam (402), and a plurality of limit brackets (403); the two support brackets (401) are respectively fixed on two sides of the frame (400) to come into contact with the bottom plate (304) of the battery pack (300) to support weight of the battery pack (300); the vertical beam (402) is fixed on a rear side of the frame (400) to match up with the grooves of the rear end plate (303) to limit the battery pack (300) along a left-right direction; the plurality of limit brackets (403) are fixed on the vertical beam (402) to limit the battery pack (300) along a vertical direction; and the front end plate (302) is connected to the support brackets (401) on the two sides through the grooves.

9. The energy storage system according to claim 8, wherein the plurality of limit brackets (403) are uniformly fixed on the vertical beam (402) by welding.

10. The energy storage system according to claim 8, wherein the energy storage system comprises a plurality of battery packs (300) electrically connected with each other through series-connected copper busbars.
